Europäisches Patentamt

European Patent Office

Office européen des brevets

(19)

(11) **EP 1 115 238 A2**

(12) **EUROPEAN PATENT APPLICATION**

(43) Date of publication:
**11.07.2001 Bulletin 2001/28**

(51) Int Cl.⁷: **H04L 27/233**

(21) Application number: **00403427.8**

(22) Date of filing: **07.12.2000**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventor: **Guilabert Mellado, Augusto**<br>**28031 Madrid (ES)** |
| (30) Priority: **21.12.1999 ES 9902801** | (74) Representative: **Lamoureux, Bernard et al**<br>**Alcatel Espana, S.A,**<br>**Patent department,**<br>**Ramirez de Prado, 5**<br>**28045 Madrid (ES)** |
| (71) Applicant: **ALCATEL**<br>**75008 Paris (FR)** | |

(54) **Acquisition method for phase recovery in a multiple access communications system and system for carrying out said method**

(57)    Acquisition method for phase recovery in a direct sequence code division multiple access communications system, in which a first phase alignment is made at the end of a first symbol period (S1), subsequently a new mean phase shift is detected at the end of a second symbol period (S2) and a second phase correction is applied, either integrally at 100%, or preferably enhanced at 150%. At said instant, a phase shift gradient is also estimated, associated with a shift in frequency, and a frequency correction is applied, said correction being applied and maintained for the duration of a subsequent symbol (S3). A final phase alignment is required at the end of a third symbol, if the 100% phase correction approach is adopted in the second symbol.

Fig. 2

## Description

The present invention relates to an acquisition method for phase recovery in a multiple access communications system and system for carrying out said method. More specifically, the present invention relates to an efficient recovery of phase in carriers, this being a function to be carried out on the reception side, in order to compensate for the offset that usually occurs in phase and in frequency between the local oscillators of the transmitter and of the receiver. The present invention can be employed, preferentially, in multiple access communications systems, such as Code Division Multiple Access (CDMA). The field of application of the invention is that of vectorial modulation of radio carrier frequencies, particularly in systems with digital signal processing. The present invention permits a short and predictable acquisition time to be obtained for performing phase recovery.

## BACKGROUND OF THE INVENTION

Carrier phase recovery is an essential function on the reception side in many multiple access systems such as CDMA and TDMA, these being two access modes widely employed in the field of the art.

In said communications systems, the signal to be transmitted is modulated in amplitude and phase by means of known modulation methods, like for example QPSK (Quadrature Phase Shift Keying) and BPSK (Binary Phase Shift Keying). The signal so modulated has to be demodulated on the reception side. In the case of CDMA, the signal is also spread before being transmitted, and de-spread in the receiver. Among the problems in the modulation is that frequency and phase error between the local oscillators of the transmitter and of the receiver produces an apparent rotation of the carrier of the signal received.

In order to compensate the offset effect, a known solution is that of using a pilot signal. The pilot signal does not contain data and serves to be able to estimate the offset in phase, by comparison with the ideal pilot signal, which is known by the receiver. It is considered that the offset suffered by the signal is defined by an angle of rotation of the vectorial components of said signal. Once the estimation is made, defining the angle mentioned, it is possible to proceed with the recovery of the phases of the signals that contain data, since these suffer practically the same offset effect. Said recovery is carried out by means of the de-rotation of the signal, which consists in performing a rotation in the opposite direction to that of the offset and through the same angle.

The difference signal between received pilot and ideal pilot is used as error signal in the PLL control loop of the generator of the de-rotation angle. It is desired for said loop to have fast acquisition and a narrow noise bandwidth in the locking maintenance phase, which to a certain extent signifies contradictory requirements.

## DESCRIPTION OF THE INVENTION

To overcome the aforementioned problems the acquisition method for phase recovery in a code division multiple access communications system and system for carrying out said method, objects of the present invention, are proposed.

According to an object of the invention, it is provided an acquisition method for phase recovery in a direct sequence CDMA multiple access communications system, comprising the steps of:

- application of a first phase alignment at the end of a first symbol period in order to provide compensation up to a mean value of phase offset,
- detection of a new phase offset at the end of a second symbol period,
- application of a second phase alignment;

characterised in that it also comprises the steps of:

- use of said new phase offset for estimating a corresponding phase offset gradient associated with an offset in frequency, and
- performing a correction in frequency within a predetermined range, said correction being applied and maintained during the entire period of a subsequent symbol.

According to an aspect of the invention, said predetermined range lies between 100% and 150%, both inclusive, of the mean value of the phase offset.

According to another aspect of the method of the invention, at the end of a third symbol period an additional phase alignment process is applied whilst said correction in frequency is retained unchanged.

According to another object of the invention, it is provided a system for carrying out the acquisition method for phase recovery in a code division multiple access communications system.

## BRIEF DESCRIPTION OF THE DRAWINGS

Figure 1 is a schematic representation of a circuit for carrying out the de-rotation process in a receiver according to the method of the invention.

Figure 2 shows the phase recovery process in coordinates of phase *vs.* time according to a first embodiment of the invention.

Figure 3 shows the phase recovery process in coordinates of phase *vs.* time according to a second embodiment of the invention.

## PREFERRED EMBODIMENTS OF THE INVENTION

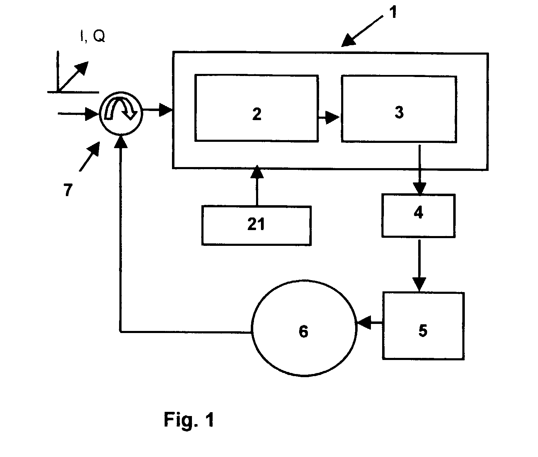

Figure 1 shows the layout of a circuit conventionally employed in direct sequence CDMA receivers, which makes use of pilot signals and serves to carry out de-rotation processes. In relation with the circuit of figure 1, the initial assumption is that the signal received is modulated, for example by means of QPSK modulation, and spread, and being formed by the components I corresponding to the in-phase component and Q corresponding to the quadrature component. The circuit of figure 1 provides a circuit in form of a loop for performing the phase recovery. In said circuit, a rotator 7 for de-rotating the signals received can be appreciated. The signal received, being the pilot signal, once passed through the rotator 7, is applied to a de-spreader 1 consisting of a correlator 2 and an add-and-dump integrator 3 by each I or Q signal. A code generator 21 provides said de-spreader 1 with the pertinent codes to carry out the de-spreading of the I and Q components of the pilot signal. The signal then passes through a phase comparator 4 in which the phase value of the received pilot signal is compared with the ideal reference pilot value. The filter 5 sets the bandwidth characteristics of the phase correction control loop. Next, the signal is sent to a voltage-controlled oscillator (VCO) 6 that is the generator of the unitary phasor for the de-rotation that takes place in the rotator 7.

In this manner, by means of the circuit of figure 1, a phase recovery loop is achieved for the signal in the reception side.

With this arrangement, the acquisition method object of the invention can be implemented as described below:

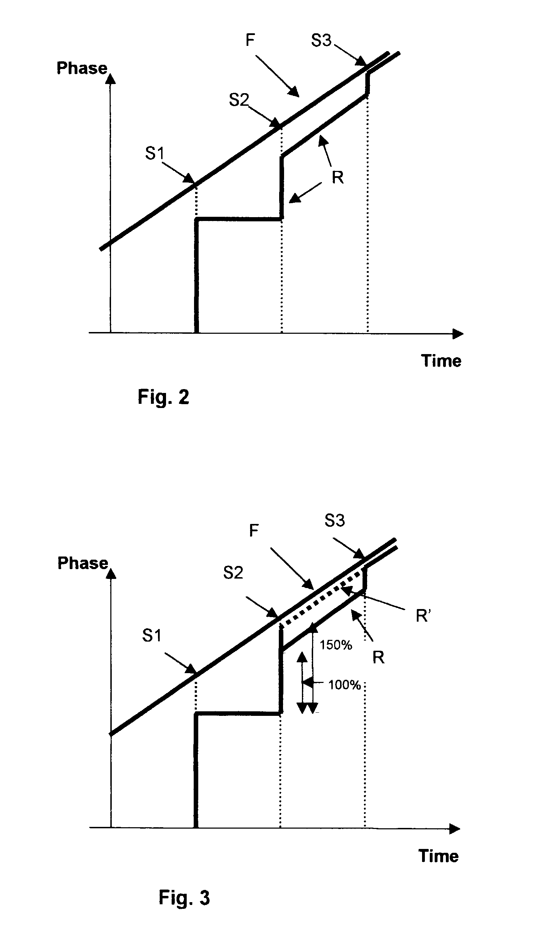

In figure 2 is shown a straight line marked with the reference F that illustrates the behaviour of the phase of the received pilot signal as a function of the elapsed time with respect to the phase of the local oscillator of the receiver, which is taken as phase reference in the figure. Likewise, a broken line can be seen, marked with the reference R, illustrating, in different stages of the phase recovery process, the level of phase correction that is added to the reference of the local oscillator in order to equalise the phase of the pilot signal received.

According to a first example of embodiment, and with reference to figure 2, the method of the invention comprises, as a first step, a first correction in phase that is applied to the oscillator 6. Said correction is carried out at the end of the first symbol period S1 and its value corresponds to the difference in phase between the output of the dumping integrator 3 and the predetermined ideal pilot value. In direct sequence CDMA, this value is equal to the mean phase error over the duration of the first symbol period.

For the purpose of providing clarity in the present description, it is pointed out that each symbol comprises a fragment of information, for example one bit or more, which all together form the digital signal that is being processed, said number of bits depending on the type of modulation applied. For example in QPSK modulation, the number of bits in each symbol is two.

The phase correction is applied integrally (multiplication factor x1) as a step function to the de-rotation generator, and with said correction takes place the demodulation of the second symbol.

At the end of the second symbol period S2, the de-spreader outputs, as the result, a pilot symbol which continues differing from the ideal signal F. In this case the difference is not only applied integrally (by multiplying by 1) as phase correction as a step function, but also permits a frequency error to be evaluated as quotient between the new phase shift produced and the symbol period. Thereafter, an additional correction is applied as a ramp function of phase having a gradient equal to the above quotient. Next, and with both corrections introduced, takes place the demodulation of the third symbol.

Finally, at the end of the third symbol period S3, an additional phase alignment process is carried out whilst the frequency correction is maintained unchanged. As can be seen from figure 2, the recovery so obtained provides values substantially close to the value of the phase of the pilot signal represented by the line F. The phase acquisition is considered to be over, and the control loop changes to being governed by the parameters corresponding to lock maintenance, which are not the object of the present invention.

According to a second embodiment of the invention, it shall be possible to optimise even more the recovery process, reducing the frequency and phase acquisition in corrections on two symbols instead of three. According to said second embodiment, and making reference to figure 3, the procedure is as follows:

The first step, that is the procedure up to the end of the first symbol period S1, is carried out in the same manner as was described in relation with the first embodiment.

Likewise, at the end of the second symbol period S2, the frequency alignment is carried out in the manner described; however, the differential alignment of phase is applied by multiplying the phase error of the second symbol by a determined value, preferentially 150%, instead of 100% as applied in the case of the first embodiment. This removes the need to perform more corrections since, in this manner, it is extrapolated the instantaneous value of the error at the end of the second symbol period S2, from the mean value over the duration of the second symbol, which is what is really output from the dumping integrator 3.

In figure 3 it is possible to appreciate the result obtained by alignment at 150% by means of the dashed and broken line R', the alignment at 100%, according to the first embodiment, being shown also for the purpose of facilitating their comparison.

The method of the present invention offers the advantage of permitting acquisition of phase and of frequency to be obtained in a completely predictable manner in a period of three symbols or even less in the case of the second embodiment thereof, thereby facilitating a process which is substantially fast.

It is to be pointed out, however, that the strategy presented with the present invention parts from the assumption that phase speed-up components are not present in the processes described. The presence of these types of component is not normally encountered, and if they are spurious they shall be corrected by the general control mechanism of the loop itself.

A further advantage of the method of the invention is explained below.

The generator of the unitary phasor 6 operates with an error information that can be affected by the presence of other co-existing CDMA signal links, and phase-locked loops (PLL) have traditionally been designed to overcome this effect. Consequently, in a conventional procedure, requirements are placed on the PLL filter that are difficult to meet. Nonetheless, the method of the invention permits a non-conventional procedure to be employed that consists in the following:

In this case, for phase evaluation is applied to the de-spreader block 1, which comprises a correlator 2 and an integrator 3, an integration period longer than usual that can be expressed by means of the following formula:

$$T_E = K * \text{(symbol period of normal data item)}$$

where K is a whole number. With this ploy the protection against noise is enhanced by a factor of 10 log (K) dB precisely, as is perfectly demonstrated in spread spectrum technology; that is, process gain for phase processing is multiplied by K. This longer integration period is applied only in the phase processing of the pilot, whereby the data (the data signal) are unaffected. The price that this extra protection of K dB implies is that the processes of phase acquisition and tracking become slower, also by a factor K. However, this is also the case in the PLL filtration techniques, with the drawback of a major impact on loop stability. With the approach offered by the present invention, the stability of the PLL is maintained unchanged, since only a re-adaptation in time is applied.

Finally it is pointed out that in the present description it has been assumed that the pilot signal has been transmitted together with the data signal. Nonetheless, the principle proposed by the invention can be generalised to the case in which the phase recovery is achieved by using the data channel itself.

## Claims

1. Acquisition method for phase recovery in a direct sequence code division multiple access (CDMA) communications system, said method comprising the steps of:

   - application of a first phase alignment at the end of a first symbol period (S1) in order to provide compensation up to a mean value of phase offset,
   - detection of a new phase offset at the end of a second symbol period (S2),
   - application of a second phase alignment;

   characterised in that it also comprises the steps of:

   - use of said new phase offset for estimating a corresponding phase offset gradient associated with an offset in frequency, and
   - performing a correction in frequency within a predetermined range, said correction being applied and maintained during the entire period of a subsequent symbol.

2. Method, according to claim 1, characterised in that said predetermined range lies between 100% and 150%, both inclusive, of the mean value of the phase offset.

3. Method, according to claim 2, characterised in that at the end of a third symbol period (S3) an additional phase alignment process is applied whilst maintaining unchanged said correction in frequency.

4. Method, according to any of the previous claims, characterised in that for phase evaluation, to a de-spreader block (1) that comprises a correlator (2) and an integrator (3), an integration period is applied that is expressed by means of the following formula:

$$T_E = K * \text{(symbol period of normal data item)}$$

   where K is a whole number.

5. System for implementing the method of claim 1.

I, Q

1

2

3

21

4

7

6

5

**Fig. 1**

**Phase**

F
S3
S2
S1
R

**Time**

Fig. 2

**Phase**

F
S3
S2
S1
150%
100%
R'
R

**Time**

Fig. 3

6